# EUROPEAN PATENT APPLICATION

(11) **EP 1 901 492 A1**
(43) Date of publication of application: **19.03.2008**
(21) Application number: 06019495.8
(22) Date of filing: 18.09.2006
(51) Int. Cl.: H04L 12/56

(54) **Router Device**

(71) Applicant: Nokia Siemens Networks GmbH & Co. KG, 81541 München (DE)
(72) Inventor: Hermoni, Roi, Tel Aviv (IL)

(57) **Abstract**

The invention is directed to a router device for routing a signal to a remote network node (119, 121) via at least one intermediate network node (115, 117) over a communication network (103), the router device comprising a provider for providing a network address of the remote network node (119, 121) and a router element for dynamically determining a network route to the remote network node (119, 121) via the at least one intermediate network node (115, 117).

## Description

The present invention is directed to a router device for routing a signal over a communication network to a destination device or to a plurality of destination devices.

In order to transmit a data signal over a communication network to a remote device, e.g. to a consumer device, a communication path through the communication network has to be determined. Usually, the data signal is transmitted via a plurality of network nodes being arranged along the communication path. Each network node may act as a router in order to determine a network address, e.g. an IP-Address of the next-hop. Moreover, the network nodes may act as switches.

In particular, when transmitting multicast data (MC) over e.g. a packed network in a static multicast configuration, it is necessary to program the switches and the routers in such a manner that information from a single source will be transmitted to all final destinations. The route through the communication network is usually determined using routing protocols.

The most common protocol for the multicast transmission is the protocol independent multicast (PIM) which is a higher level signalling protocol which signals only the requested channels. However, the distribution of the load is not based any usage statistics. The PIM software makes use of one or more of the following three protocols underlying the unicast protocol: open shortest path first (OSPF), intermediate system to intermediate system protocol (IS-IS) or static protocol.

The PIM scheme suffers, however, from several problems. It is complicated to design, to configure and to maintain. Thus, troubleshooting is difficult. Moreover, the PIM scheme is expensive and requires a large amount of signalling overhead in the network. Moreover its performance in the case of a failure is not satisfactory because the recovery time includes the recovery of the underlying unicast (UC) protocol and the recovery time of the PIM scheme.

Further routing solutions are e.g. the IGMP snooping (Internet Group Management Protocol), IGMP-proxy or flooding. However, these approaches suit for L2-networks only. However, it is difficult to achieve scaleability using the above mentioned approaches. In addition, the zapping time is in particular for large networks too high.

Further routing approaches for the L3 networks are the PIM-SM (Protocol Independent Multicast-Sparse Mode), PIM-DM (Protocol Independent Multicast-Dense Mode) or PIM-SSM (Protocol Independent Multicast-Source Specific Mode). These protocols have a large overhead and are characterized by a poor resiliency (several minutes). In addition, the L3 devices are expensive.

In the multi protocol level switching networks (MPLS), the virtual private LAN services (VPLS), the hierarchical VPLS (HVPLS), the point to multipoint approach (P2MP) and the lightweight streaming protocol (LSP) may be employed. However, these approaches are associated with a significant overhead and are expensive.

It is the object of the present invention to provide a simple and efficient routing scheme.

This object is achieved by the features of the independent claims.

The present invention is based on the finding that the efficient routing scheme can be achieved when e.g. statically programming the network address of e.g. a last IP device in the network which may be arranged next to e.g. a consumer device, for example next to a MC consumer in the case of multicast networks. The communication path to the last IP device in the network may be determined dynamically using e.g. one of the known routing protocols like the OSPF.

The present invention provides a router device for routing a signal to a remote network node, e.g. to a last IP device in the network, via at least one intermediate network node over a communication network. The router device may comprise a provider for providing a network address of the remote network node and a router element which is configured to dynamically determine a network route to the remote network node via the at least one intermediate network node.

The intermediate network node may be e.g. another router or a router device according to the present invention. The router element dynamically determines the network address of the next-hop being arranged along the communication path connecting the router device and the remote network node.

According to an aspect, the provider may comprise a storage element which stores the network address of the remote network node. For example, the network address may statically be stored in a table. Furthermore, the network address of the remote network node may be configurable by a user. Thus, the user may e.g. determine the last network node, e.g. a network node interfacing with a consumer device, in order to pre-define the interface to the consumer device.

According to an aspect, the router element is configured to dynamically determine the network address of a next intermediate network node which is adjacent to the router device (the next-hop) using a routing protocol. Thus, the router element dynamically determines the network route to the remote network node via one or more intermediate network nodes using the routing protocol. For example, the routing protocol may be the open shortest path first protocol (OSPF), the interior gateway protocol (IGP) or a recursive routing protocol.

According to an aspect, the remote network node may form an interface between the communication network and a further communication network, e.g. between a L3 and a L2 network or an in-house network. Furthermore, the remote network node may directly communicate with a consumer device. Furthermore, the provider may further provide a network address of the consumer device statically, so that the communication path through the network to the consumer device or to a network termination unit may be pre-determined.

According to an aspect, the router device may be configured to multicast signals to different entities, e.g. to different consumer devices or to different remote network nodes via different communication paths.

According to an aspect, the provider is configured to provide a further network address of a further remote network node, wherein the router device and the further remote network node may be separated by one or more intermediate network nodes. In order to determine a route to the further network node, the router element may dynamically determine a further network route to the further remote network node via the at least one intermediate network node or via a plurality of network nodes. The router element preferably determines the further network route using e.g. one of the routing protocols mentioned above. Preferably, the router element dynamically determines a network address of a further next intermediate network node which is adjacent to the router device using a routing protocol, e.g. a recursive routing protocol.

According to an aspect, the router device may route the signal or a plurality of signals to a plurality of remote network nodes of the communication network in a multicast scenario, wherein the router device and each of the remote network nodes are respectively separated by one or more intermediate network nodes. The provider may provide network addresses of the remote network nodes in order to predetermine a respective path to a respective further network node. The network addresses of the remote network nodes may be stored in the memory element and/or may be configurable by a user. According to the invention, the router element dynamically determines a network route to each of the remote network nodes using e.g. one of the aforementioned routing protocols. Thus, each network route linking the router device and a respective remote network node forms a communication path comprising at least one or more intermediate network nodes separating the router device and a respective remote network node.

According to an aspect, the router device may form an interface between the communication network and a further communication network, for example an interface between the communication network and e.g. an in-house network. Thus, the router device may form a central element distributing a signal in a multicast manner to e.g. different consumer devices or to different network termination units via the plurality of pre-determined remote network nodes.

The present invention further provides a method for routing a signal to a remote network node over a communication network via at least one intermediate network node. The method comprises providing a network address of the remote network node and dynamically determining a network route to the remote network node via the at least one intermediate network node. Further steps of the inventive method are derivable from the functionality of the inventive router device.

Further embodiments of the present invention will be described with respect to the following figures, in which:
Fig. 1 shows a multicast distribution scheme according to an aspect of the invention; and
Fig. 2 demonstrates the processing flow according to an aspect of the invention.

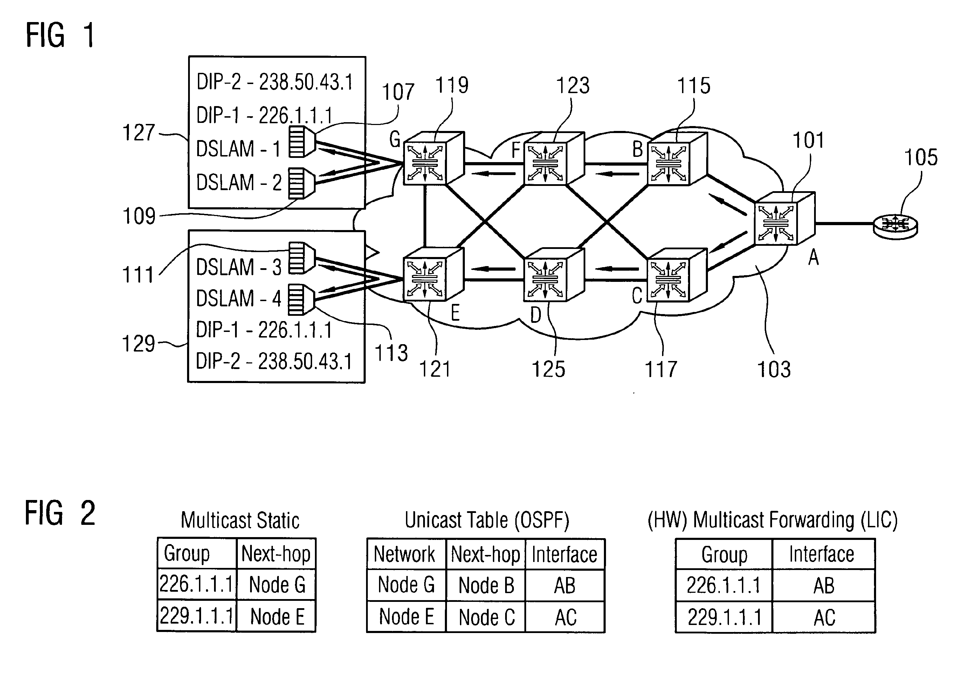

A Router device 101 shown in Fig. 1 is arranged within a network 103 and is forwards a (data) signal being transmitted by e.g. a transmitter 105 to the receivers 107, 109, 111 and 113 in a multicast manner. In particular, the router device 101 may transmit a data signal to any of the receivers 107 to 113 via either a first intermediate network node 115 or via a second intermediate network node 117. The network address of the first intermediate network node 115 or the network address of the second intermediate network node 117 is determined dynamically by the router device 101 using a routing protocol.

The intermediate network nodes 115 and 117 may determine further next-hops according to a routing protocol in order to reach a first remote network node 119 and a second remote network node 121. According to the invention, the network addresses of the first remote network node 119 and of the second remote network node 121 are pre-configured in order to pre-define the network interface point communicating with the receivers 107 to 113. The first and the second remote network node may be reached via further intermediate network nodes 123 and 125 over a plurality of communication paths depicted by the arrows in Fig. 1.

The inventive concept illustrated in Fig. 1 uses static configuration of the router device and relies e.g. on recursive routing using an interaction between the existing tables which may be programmed in the network nodes acting e.g. as routers. Thus, best resiliency can be guaranteed in most of the practical network scenarios, in particular in a ring topology, since certain remote network nodes are statically predefined as the end points of the network via which a communication with the receivers or with the consumer devices may be performed.

In order to configure e.g. a next-hop address in the tables of the network nodes shown in Fig. 1, the address of the last device in the network, e.g. the remote network node 119, next to the MC consumer 107 or 109 is programmed rather than the attached next-hop address of a corresponding adjacent network node. The last IP device (e.g. the remote node 119 or 121) may function as an IGMP router forming a demarcation point between the communication network 103 and the further network 127 and 129. For example, the communication network 103 is a L2 access network and the network 127 or 129 is a L3 metro network or an in-house network. Generally, the elements 127 and 129 denote user domains in which the respective receivers are arranged.

According to the invention, the network nodes 115, 117, 119, 121 and 123 may comprise the features of the inventive router device 101.

In order to dynamically determine a respective communication path between the router device 101 and the network node 119 or 121, a routing protocol may be implemented in all routers (including the router device 101). Preferably, the underlying router protocol is the OSPF running e.g. in parallel in all routers shown in Fig. 1. The router protocol will calculate the port (outgoing interface) to use in order to reach the remote next-hop 119 or 121. Thus, the router protocol may be based on e.g. a recursive IP look-up-scheme which may also be used for unicast routing. In particular, the routing protocol may perform an IP look-up-process from a remote reference point being formed by e.g. the remote network node 119 or 121 down to the attached next-hop or port, e.g. nodes 115 and 117.

The OSPF calculation results, i.e. the specific outgoing interface, will be configured automatically into e.g. a MC forwarding table (HW-table, HW=hardware) which may also comprise a destination MC address of the remote node 119 or 121 as e.g. configured statically by a network operator.

When statically defining a remote IP address at the next-hop, the path to reach the remote IP address is fully dynamic and resilient. This results from employing e.g. the OSPF protocol including the remote IP next-hop address in a routing table in accordance with the present invention.

In order to implement a recursive look-up, the following process may be performed:
- defining the destination address of e.g. the remote receiver 107, 109, 111, 113 (MC destination which may be configured statically by a user);
- defining the remote IP next-hop 119 and/or 121 which may statically be configured by the user;
- automatically calculating the interface to use in order to reach the remote IP next-hop 119 or 121 by e.g. using the OSPF protocol.

In recursive routing scenarios, the destination IP address of the packets is never changed which corresponds to the regular IP routing.

For example, in a typical MC case depicted in Fig. 1, the same source 105 (at the right) is multi-cast with respect to two clients 127 and 129. According to the invention, the user may program the address of the node 119 (node G) in a table of the router device 101 (node A) as a remote "next-hop". Correspondingly, the user may program the address of the remote node 121 (node E) as an alternative "next-hop" to be activated in a case of a failure. For example, the router device 101 may receive an error signal indicating a failure of the node 119. In this case, the router device may switch over to the node 121 in order to establish an alternative communication path.

Fig. 2 shows an IP multicast distribution scheme with an interaction of tables comprising network addresses of network nodes. The table contents may be divided in e.g. three categories: multicast static, unicast table (OSPF) and (HW) multicast forwarding (LIC). The processing flow is indicated by the arrow depicted in Fig. 2.

The multicast static entries may e.g. comprise a group field and a next-hop field. The group field may comprise entries associated with network addresses of devices or interface ports arranged within the network 127 or 129. The entries in the next-hop field may e.g. comprise network addresses or further information indicating e.g. the node G and/or the node E. The unicast table may comprise a network field, a next-hop field and an interface field as shown in Fig. 2. The multicast forwarding table may comprise a group field and an interface field. According to the invention, the multicast static table is exploited first. Based upon the unicast table, the next-hops may dynamically be determined. Furthermore, the respective interface between the router device 101 and a respective network node is defined. The multicast forwarding table may define the addresses of the consumer devices or receivers 107 to 113 and a respective interface between the router device 101 (node A) the respective intermediate network node 115 and/or 117.

According to the invention, the user will configure the static entries in the multicast static table to pre-define e.g. the destination MC address (e.g. 226.1.1.1 or 229.1.1.1) and e.g. the remote IP addresses of nodes G and E. The OSPF protocol will chose the single best route to each of the IP address (next-hop). This route includes physical interface which is to be used. This process is dynamic and triggered by the topology changes. For example, if e.g. the intermediate node 123 is subject to a failure, then an alternative path may be determined. The physical interface may be calculated by the routing protocol and may be configured in a (HW) multicast table.

The inventive static routing approach defines e.g. attached interface/IP addresses, so that no resiliency occurs. The static routing defines the remote next-hops (e.g. the devices G and E), wherein the path to reach the remote next-hope is calculated dynamically using e.g. the IGP which results in a resilient path. Thus, the inventive approach may employ the recursive routing for determining the route through the communication network. Furthermore, the operator may configure in a set-up time the MC address and the remote next-hop. Thus, no explicit backups are necessary, since this operation may automatically be performed.

The inventive router device may be configured to determine a best path and e.g. optional path in order to reach the destination address. For example, in Fig. 1, the path via the nodes A, B, F, G may form the best path. The optional paths may be formed by the following paths: A, C, F, G or A, C, D, G or any other path combination when transmitting a signal through the optional node C.

The inventive resilience static MC distribution is cost-effective since an IP MC protocol is not required. Moreover, the inventive concept suits for L2 and for L3 network as well. The resiliency is good and in the order of a subsecond. The problems associated with the zapping time do not arise, since zapping time is not an issue anymore. Moreover, the bandwidth is predictable and the routing scheme is highly scaleable, since the only limit is the (MC) routing table size. The inventive approach takes the real-live experience into account, since usually the popular channels will be requested by the edges at any given time. Thus, an extra protocols signalling the popular channels and ruining the resiliency are not necessary anymore. The inventive approach exploits the good lineament of the static approach and defeats the bad lineament (lack of resiliency). Furthermore, the provisioning, the management and the troubleshooting are simplified when e.g. compared with approaches using a combination of true protocols, e.g. the IGP and the PIM protocol. The inventive method is simple and provides good resiliency and faster recovery time when compared with the known techniques. The benefit and the entangled complication of dynamic configuration schemes provided by the known PIM schemes is usually unnecessary because in typical applications and users for each of the MC sources may be present. Furthermore, the inventive concept enables a costs-effective multicast distribution and forms e.g. an IPTV-oriented practical solution.

## Claims

1. A router device for routing a signal to a remote network node (119, 121) via at least one intermediate network node (115, 117) over a communication network (103), the router device comprising:
a provider for providing a network address of the remote network node (119, 121); and
a router element for dynamically determining a network route to the remote network node (119, 121) via the at least one intermediate network node (115, 117).

2. The router device according to claim 1, the provider comprising a storage element storing the network address of the remote network node (119, 121).

3. The router device according to claim 1 or 2, the network address of the remote network node (119, 121) being configurable by a user.

4. The router device according anyone of the claims 1 to 3, the router element dynamically determining a network address of a next intermediate network node (115, 117) being adjacent to the router device (101) using a routing protocol.

5. The router device according to anyone of the claims 1 to 4, the router element being configured to dynamically determine the network route using a routing protocol.

6. The router device according to claim 5, the routing protocol being the open shortest path first protocol (OSPF) or the interior gateway protocol (IGP).

7. The router device according to anyone of the claims 1 to 6, the remote network node (119, 121) forming an interface between the communication network and a further communications network.

8. The router device according to anyone of the claims 1 to 7, the remote network (119, 121) node being configured to directly forward the signal to a consumer device, the provider being further configured to provide a network address of the consumer device.

9. The router device according to anyone of the claims 1 to 8, the provider being configured to provide a further network address of a further remote network node (119, 121), the further remote network (119, 121) node and the router device (101) being separated by at least one further intermediate network node (115, 117), the router element being configured to dynamically determine a further network route to the further remote network node via the least one intermediate network node.

10. The router device according to claim 9,

11. The router device according to claim 9, the router element dynamically determining a network address of a further next intermediate network node (115, 117) being adjacent to the router device (105) using a routing protocol.

12. The router device according to anyone of the claims 1 to 11, the router device (105) being configured to route the signal to a plurality of remote network nodes (119, 121) over the communication network (103) in a multicast manner, the router device (101) and each remote network node (119, 121) being respectively separated by at least one intermediate network node (115, 117), the provider being configured to provide network addresses of the remote network nodes (119, 121), the router element being configured to dynamically determine a plurality of network routes to the plurality of remote network nodes (119, 121), each network route forming a communication path between the router device (101) and a respective remote network node (119, 121), the communication path comprising at least one intermediate node (115, 117) separating the router device (101) and the remote network node (119, 121).

13. The router device according to anyone of the claims 1 to 12, the router device (101) forming an interface between the communication network (103) and a further communications network.

14. The router device according to anyone of the claims 1 to 13, comprising a receiver for receiving the signal and a transmitter for transmitting the signal or a processed version thereof to an adjacent network node over the communications network.

15. A method for routing a signal to a remote network node over a communications network via at least one intermediate network node, the method comprising:
providing a network address of the remote network node; and
dynamically determining a network route to the remote network node via the at least one intermediate network node.
